# EUROPEAN PATENT APPLICATION

(11) **EP 4 415 340 A1**
(43) Date of publication of application: **14.08.2024**
(21) Application number: 22885263.8
(22) Date of filing: 02.08.2022
(51) Int. Cl.: H04M 1/73, G06F 9/50

(54) **MANAGEMENT AND CONTROL METHOD FOR WHITE LIST, AND DEVICE AND STORAGE MEDIUM**

(30) Priority: 25.10.2021 CN 202111238364
(71) Applicant: ZTE Corporation, Shenzhen, Guangdong 518057 (CN)
(72) Inventor: SHI, Hongliang, Shenzhen, Guangdong 518057 (CN)
(74) Representative: Savi, Massimiliano
(86) International application number: PCT/CN2022/109787
(87) International publication number: WO 2023/071363

(57) **Abstract**

Provided in the present application are a management and control method for a white list, and a device and a storage medium. The method comprises: receiving a clone application creation request from a first user, wherein the clone application creation request is used for requesting the creation of a clone application corresponding to a main application (S100); acquiring a first white list corresponding to the first user, wherein the first white list is a list of applications that are allowed to enter a standby sleep mode (S200); and when the main application is in the first white list, adding the clone application to the first white list (S300).(To be published with FIG. 2)

## Description

### CROSS-REFERENCE TO RELATED APPLICATION

This application is based on and claims the priority of Chinese patent application No. 202111238364.X filed on October 25, 2021, the disclosure of which is incorporated herein by reference in its entirety.

### TECHNICAL FIELD

Embodiments of the present disclosure relate to, but are not limited to, the technical field of communications, for example, to a whitelist managing method, a device, and a storage medium.

### BACKGROUND

Standby hibernation mode is a power-saving function introduced by a terminal, such as the Doze mode and application(App) standby mode, which helps users to extend the battery life of the terminal by managing the behavior of the application when the terminal is not connected to the power supply. In the practical application process, a cloner application is usually created for an application so that the same terminal device can use applications of different accounts at the same time, so that when the terminal device enters the standby hibernation mode, the main application corresponding to the cloner application runs normally. However, the cloner application is often managed to achieve the purpose of power saving, in which case the user cannot use this cloner application normally and this will increase the management power consumption of the current terminal device.

### SUMMARY

The following is a summary of the subject matters described in detail herein. This summary is not intended to limit the scope of protection of the claims.

Embodiments of the present disclosure provide a whitelist managing method, a device, and a storage medium that can reduce the management power consumption.

In accordance with a first aspect of the present disclosure, an embodiment provides a whitelist managing method, including: receiving a cloner application creation request from a first user, where the cloner application creation request is used to request the creation of a cloner application corresponding to a main application; acquiring a first whitelist corresponding to the first user, where the first whitelist is a list of applications allowed to enter a standby hibernation mode; and adding the cloner application to the first whitelist in the case where the main application is in the first whitelist.

In accordance with a second aspect of the present disclosure, an embodiment further provides an electronic device, the device including: a receiving processing module for receiving a cloner application creation request from a first user, where the cloner application creation request is used to request the creation of a cloner application corresponding to a main application; an acquisition module for acquiring a first whitelist corresponding to the first user, where the first whitelist is a list of applications allowed to enter a standby hibernation mode; and a list processing module for adding the cloner application to the first whitelist in the case where the main application is in the first whitelist.

In accordance with a third aspect of the present disclosure, an embodiment further provides an electronic device, including: a memory, a processor, and a computer program stored in the memory and executable by the processor, where the computer program, when executed by the processor, causes the processor to implement a whitelist managing method of any one of the first aspects.

In accordance with a fourth aspect of the present disclosure, an embodiment further provides a computer-readable storage medium storing computer-executable instructions configured to cause a computer to perform a whitelist managing method of any one of the first aspects.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
FIG. 1 is a schematic module block diagram of an electronic device of an embodiment of the present disclosure;
FIG. 2 is a flowchart of a whitelist managing method of an embodiment of the present disclosure; and
FIG. 3 is a flowchart of user switching in the whitelist managing method of an embodiment of the present disclosure.

### List of reference numerals:

Receiving processing module 100, acquisition module 200, list processing module 300, cloner application listening module 400, and multi-user listening module 500.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It is to be noted that although a functional module division is shown in a schematic diagram of an apparatus and a logical order is shown in a flowchart, the steps shown or described may be executed, in some cases, with a different module division from that of the apparatus or in a different order from that in the flowchart. The terms such as "first" and "second" in the description, claims and above-mentioned drawings are intended to distinguish between similar objects and are not necessarily to describe a specific order or sequence.

In related technology, the standby hibernation mode, a power-saving function introduced into the terminal device, is an application mode, such as the Doze mode and the App Standby mode, of the terminal device that helps the user to extend the battery life of the terminal device by managing the way applications behave when the terminal device is not connected to a power source. Meanwhile, in the practical application process, a cloner application is usually created for an application, and when the terminal device enters the standby hibernation mode, although the application corresponding to the cloner application is running, the cloner application is often managed to achieve the purpose of power saving, which results in delayed receiving of messages or even failure to receive messages of the cloner application. For example, in the case where a cloner has been created for a social application, after the social application enters the standby hibernation mode, the messages from its application cloner are delayed or even not received. To this end, the user needs to frequently switch between the standby hibernation mode and the normal mode to be able to normally receive the messages of the cloner application, in which case the management energy consumption of the terminal device increases. In view of this, embodiments of the present disclosure provide a whitelist managing method, a device, and a storage medium that reduce unnecessary management and thus can reduce the management power consumption.

First, relevant terminology involved in the embodiments of the present disclosure is described as follows.

The Doze mode is a mode that reduces battery consumption by delaying background CPU and network activities of applications when the device is in an idle state for a long period of time.

The App standby mode indicates that when the user has not touched the application for a period of time, applications are disabled from accessing the network and prohibited from performing any pending jobs and synchronization. If the device is in an idle state for a long period of time, the system will allow idle applications to access the network on a frequency of approximately once per day.

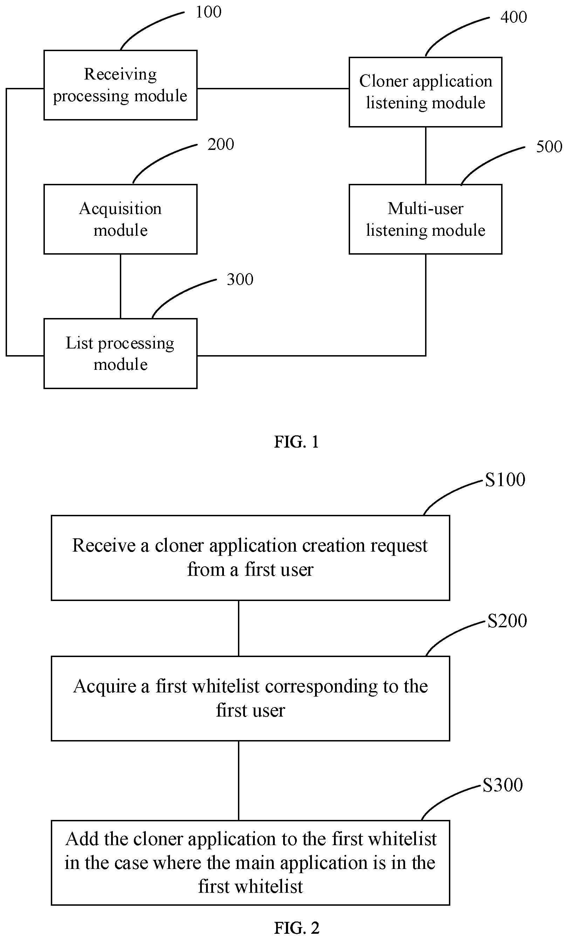

With reference to the embodiment shown in FIG. 1, the embodiment of the present disclosure provides an electronic device, including:
a receiving processing module 100 for receiving a cloner application creation request from a first user, where the cloner application creation request is used to request the creation of a cloner application corresponding to a main application;
an acquisition module 200 for acquiring a first whitelist corresponding to the first user, where the first whitelist is a list of applications allowed to enter a standby hibernation mode; and
a list processing module 300 for adding the cloner application to the first whitelist in the case where the main application is in the first whitelist.

It is to be noted that the standby hibernation mode includes at least one of a doze mode or an App standby mode, and the electronic device is a terminal device, such as a cell phone, a tablet, or the like. Taking a cell phone as an example, when the cell phone receives a cloner application creation request from an application A of the first user, it obtains a cloner application B. When the application A is in the first whitelist, it means that the application A can continue to run normally in the background in the standby hibernation mode, in which case the cloner application B is automatically added to the first whitelist through the acquisition module 200 and the list processing module 300. In this case, in some embodiments, when the application A and the cloner application B are running, if the terminal device is switched from the normal mode to the standby hibernation mode, the application A and the cloner application B will continue to run normally. In some other embodiments, when the cloner application B is running normally, if the terminal device is switched from the normal mode to the standby hibernation mode, the cloner application B will still run normally. Therefore, by means of the embodiments of the present disclosure, unnecessary management of the cloner application B can be reduced, which in turn can reduce the management power consumption of the entire device.

It is to be noted that with reference to the embodiment of FIG. 1, the device further includes a cloner application listening module 400 and a multi-user listening module 500, where the multi-user listening module 500 listens to the state of execution of the operations of user creation and user switching, and collects a list of applications of the current user, and sends the list of users to the list processing module 300, and the list processing module 300 adjusts the whitelist of the current user according to the list of users and the first whitelist. For a single user or a certain user in a multi-system, after the application cloner listening module 400 listens for the successful creation of the cloner application of the receiving processing module 100, it obtains information about the cloner application B and sends it to the list processing module 300 for the adjustment of the first whitelist. In the case of multiple users, after successful user switching, the adjustment of the whitelist for the current user is re-performed. Exemplarily, taking the first user being the current user and the second user being the user to be switched to as an example, the receiving processing module 100 processes a user switching request and switches to the second user; and when the multi-user listening module 500 listens for successful switching, it sends the information about the list of applications of the second user to the list processing module 300, and the list processing module 300 carries out a list adjustment based on the list of applications. Exemplarily, taking the new creation of the second user as an example, when the multi-user listening module 500 listens for the successful creation of the second user, it sends the user information of the second user to the list processing module 300, so that the list processing module 300 can obtain a list of applications corresponding to the user information of the second user, and at this time, by traversing this list of applications, it determines whether there exists an application with the same application name as an application in the first list, and in the case where it exists, the application identifier of the cloner application corresponding to the application name is added to the first list.

It is to be noted that for the multi-user listening module 500 and the application cloner listening module 400, separate threads may be created for listening, thereby realizing real-time and efficient list adjustment.

Therefore, based on the above embodiment, by automatically adding the cloner application corresponding to the main application to the first whitelist, both the main application and the corresponding cloner application can operate normally after the terminal device enters the standby hibernation mode without the need for unnecessary management of the cloner application. Therefore, embodiments of the present disclosure are capable of reducing the management power consumption compared to the conventional way that requires managing the cloner application after entering the standby hibernation mode.

Those of ordinary skill in the art may understand that the topological structure shown in FIG. 1 does not constitute a limitation on the embodiments of the present disclosure, and there may be more or fewer modules than illustrated, or some of the modules may be combined, or a different arrangement of the modules may be used.

In accordance with another aspect of the present disclosure, an embodiment further provides a whitelist managing method. Various embodiments of the embodiments of the present disclosure are further described below in conjunction with the accompanying drawings.

Referring to the embodiment shown in FIG. 2, the whitelist managing method includes:
At S 100, a cloner application creation request from a first user is received, where the cloner application creation request is used to request the creation of a cloner application corresponding to a main application.

It is to be noted that the main application is one that comes with the terminal system or is downloaded from an application market, and that when the cloner application processing request is created successfully, a cloner application with an application function and an application name that are consistent with those of the main application is generated, and the main application and the cloner application may be operated under the same system user at the same time, for example, the first user may log in to the main application and the cloner application separately using two different login accounts.

It is to be noted that the cloner application has the same application name as the main application. In some embodiments, for the cloner application, it will be assigned an application identifier after being successfully created, which is unique, and as to the main application, it is also provided with a unique application identifier. In some embodiments, the application identifier is a string of numbers.

Exemplarily, taking the main application A as an example, after the first user initiates a cloner application creation request with respect to the main application A, the terminal device generates a cloner application B corresponding to the main application A and, in some embodiments, generates an application identifier of the cloner application B.

At S200, a first whitelist corresponding to the first user is acquired, where the first whitelist is a list of applications allowed to enter a standby hibernation mode.

It is to be noted that the first whitelist is a whitelist that the terminal device is currently running, and by setting the first whitelist, the terminal device manages the applications other than those in the first whitelist after entering the standby hibernation mode so that only the applications in the first whitelist run normally, thereby achieving the purpose of power saving.

At S300, the cloner application is added to the first whitelist in the case where the main application is in the first whitelist.

It is to be noted that the application functions of the main application and the cloner application are the same. For the same system user, taking WeChat as an example, the first user has two WeChat accounts, in which case he or she can log in WeChat account 1 on WeChat A and WeChat account 2 on the cloner application of WeChat A, so that he or she can use two WeChats on the same terminal device in order to deal with different things separately; and for the first user, the demands for WeChat A and the corresponding cloner application are similar or the same, and he or she needs to acquire the information on both WeChats in time for processing, and therefore by determining whether the main application is in the first whitelist and then automatically adding the cloner application, it is possible to reduce the unnecessary management of the cloner application in the standby hibernation mode, and at the same time, it is possible to reduce the user's operations of the cloner application, thereby providing a better user experience.

It is to be noted that, in some embodiments, referring to the embodiment of FIG. 1, after step S 100, listening may be performed by the cloner application listening module 400 to obtain the information about the cloner application B, which is sent to the list processing module 300 for the processing step S300, so that list processing is performed in synchronization with user request processing, and at the same time, modular processing is more efficient.

Therefore, by automatically adding the cloner application corresponding to the main application to the first whitelist, both the main application and the corresponding cloner application can operate normally after the terminal device enters the standby hibernation mode without the need for management of the cloner application. Therefore, embodiments of the present disclosure are capable of reducing the management power consumption compared to the conventional way that requires managing the cloner application after entering the standby hibernation mode.

It is to be understood that the standby hibernation mode includes at least one of a doze mode or an App standby mode; and correspondingly, the first whitelist includes at least one of a doze whitelist or an App standby whitelist, where the doze whitelist is a list of applications allowed to enter the doze mode, and the App standby whitelist is a list of applications allowed to enter the App standby mode.

It is to be noted that, in some embodiments, the terminal device supports both the doze mode and the App standby mode, in which case a doze whitelist is set for the doze mode and an App standby whitelist is set for the App standby mode. The doze whitelist and the App standby whitelist are separately acquired via S200, and step S300 is performed separately for the doze whitelist and the App standby whitelist to update the doze whitelist and the App standby whitelist under the first user. In some other embodiments, the terminal device supports only the doze mode, in which case, after acquiring the doze whitelist at step S200, an updated doze whitelist is obtained via step S300. In some other embodiments, the terminal device supports only the App standby mode, so after the App standby whitelist is acquired at step S200, an updated App standby whitelist is obtained via step S300. After the corresponding whitelist is updated, the terminal system runs the updated whitelist.

It is to be understood that step S300 of adding the cloner application to the first whitelist in the case where the main application corresponding to the cloner application is in the first whitelist includes: acquiring an application name set corresponding to the first whitelist; and adding the cloner application to the first whitelist in the case where there exists an application in the application name set that has an application name matching that of the main application.

It is to be noted that each application in the first whitelist corresponds to an application name, and the set of application names of all applications in the first whitelist is the application name set.

Exemplarily, assuming that there is application information corresponding to application C, application D, application E, application F, and application G in the first whitelist, then in the case where the application name of application D is the same as that of the main application (i.e., there is currently a cloner application creation request for application D), the cloner application B corresponding to the main application is automatically added to the first whitelist. In the case where the application names of application C, application D, application E, application F, and application G are all different from that of the main application, then there is no need to perform operations on the cloner application B.

It is to be understood that adding the cloner application to the first whitelist includes: adding an application identifier of the cloner application to the first whitelist.

It is to be noted that each application (including the main application and the cloner application) has a unique identifier (i.e., an application identifier) on the terminal device for the purpose of differentiation. By adding the application identifier to the first whitelist, when the terminal device manages and maintains the currently running first whitelist, it can maintain only application identifiers, which is simpler and more efficient.

Exemplarily, assuming that there are application identifiers {1,2,3,4,5} corresponding to application C, application D, application E, application F, and application G in the first whitelist, and the application identifier of the cloner application is 6, the first whitelist is {1,2,3,4,5,6} after the cloner application is added.

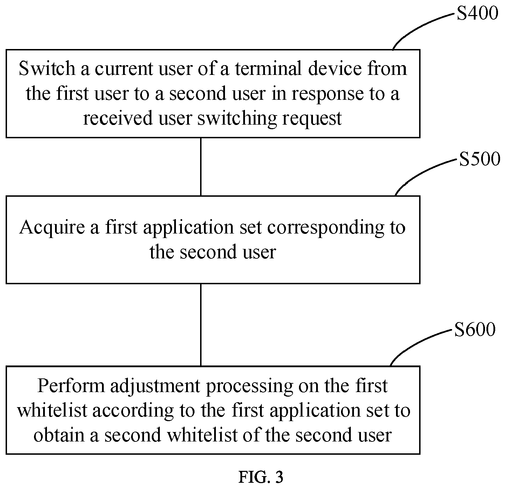

Understandably, after a new user account is logged in, there are applications of other users in the first whitelist, so the applications of the other users are still allowed to run by the system of the terminal device, which then leads to an increase in power consumption due to the fact that the applications of the other users are executing data services. On this basis, with reference to the embodiment shown in FIG. 3, in a multi-user system, taking the current user being the first user as an example, the method of the embodiment of the present disclosure further includes:
At S400, a current user of a terminal device is switched from the first user to a second user in response to a received user switching request.

At S500, a first application set corresponding to the second user is acquired, where the first application set is a list of applications of the second user that are allowed to enter the standby hibernation mode.

It is to be noted that the first application set is a list of applications configured by the second user. For each application on the terminal device, it contains application configuration information for different users.

At S600, adjustment processing is performed on the first whitelist according to the first application set to obtain a second whitelist of the second user. Herein, the adjustment processing includes at least one of
removing an application that does not exist in the first application set from the first whitelist; or
adding an application that exists in the first application set and does not exist in the first whitelist to the first whitelist.

It is to be noted that in a multi-user system, after user switching is performed, the first whitelist still contains the application information of the former user before switching, so that when the application exists in the system of the second user, after the application has been started, the application is still allowed to run by the system after the system enters the standby hibernation mode, and performs power-consuming behaviors, such as data services. Therefore, removing the application identifier of an application that does not exist in the first application set from the first whitelist can ensure that the applications that can run must be the ones that the second user has set.

It is to be noted that there are cases where the lists of applications allowed to be whitelisted by the first user and the second user are different, for example, there are cases where certain applications set by the second user, such as drawing software, are not in the first whitelist for the time of running by the first user, and therefore there is a need to also add applications of the second user that are not in the first whitelist.

It is to be noted that only one, or possibly two, of the above two adjustment approaches exist in some embodiments, and there is no conflict between the two adjustment approaches.

Exemplarily, it is assumed that the first whitelist is {1,2,3,4,5}, where 1, 2, 3, 4, and 5 correspond to application C, application D, application E, application F, and application G, respectively. In some embodiments, the first application set is {Application C, Application D, Application E, Application F}, then the application with an application identifier of 5 in the first whitelist needs to be removed to obtain a second whitelist of {1,2,3,4}. In some other embodiments, the first application set corresponds to application identifiers {1,2,3,4,7}, which correspond to application C, application D, application E, application F, application G, and application H, respectively, then it is necessary to separately remove an application with an application identifier of 5 from the first whitelist and add an application with an application identifier of 7 to the first whitelist, in order to obtain the second whitelist of {1,2,3,4,7}, in which case application C, application D, application E, application F, and application H can run in the standby hibernation mode.

It is to be noted that the second whitelist is the whitelist that the terminal device runs after step S600 is performed.

It is to be understood that for the case of multiple users, the creation of a new user is allowed, and taking the second user being a user to be created as an example, the embodiment of the present disclosure further includes: responding to a user creation request from a second user and acquiring a first application set corresponding to the second user; and adding a first application that exists in the first application set and has an application name matching that of an application in the first whitelist to the first whitelist.

It is to be noted that application matching indicates application name matching, and as to the first application, the first application is a main application or a cloner application.

It is to be noted that a cloner application of the second user that matches an application in the first whitelist is added to the whitelist so that in the case of switching from the first user to the second user, only an application for which the main application is not in the first whitelist and its corresponding cloner application need to be added, which reduces the application adjustments of the second whitelist, and can thus enhance the efficiency of switching when performing the switching of the second user.

It is to be understood that adding a first application that exists in the first application set and has an application name matching that of an application in the first whitelist to the first whitelist includes: acquiring an application name set corresponding to the first whitelist; traversing each application in the application name set and performing application name matching with applications in the first whitelist to obtain several first applications; and adding application identifiers of cloner applications corresponding to the first applications separately to the first whitelist.

It is to be noted that the first whitelist is managed through application identifiers, and for a multi-user system, in some embodiments, each main application shares an application identifier under different users, and therefore it is only necessary to add the cloner application of the application to the first whitelist, which in turn can enable the cloner application to be in effect quickly after switching.

Exemplarily, when the second user is created, a cloner application B is created for the main application A. Assuming that the first whitelist is {1,2,3,4,5} and that the application name of the main application A is the same as that of the application corresponding to the application identifier 1, the application identifier 6 of the cloner application B is added to the first whitelist, namely, the first whitelist is {1,2,3,4,5,6}.

It is to be noted that with reference to the embodiments shown in FIGs. 2 and 3, in some embodiments, the terminal device only supports the addition of a cloner application of steps S100 to steps S300. In some other embodiments, the terminal device supports steps S100-S300 as well as the identification and removal of applications of non-current users during switching between multiple users, thereby ensuring automatic operations of the whitelist of cloner applications of a single user and that applications entering the standby hibernation mode in the case of multiple users are all applications that the current user allows to be executed, so as to reduce the power-consuming behaviors of non-normal applications. In some other embodiments, the terminal device supports steps S100-S300 and the addition of cloner applications during the creation of a new user. In some other embodiments, the terminal device supports steps S100-S300, the addition of cloner applications during the creation of a new user, and the identification and removal of applications of non-current users during switching between multiple users.

It is to be noted that in a multi-user system, the creation of a new user and the switching between users are performed in no particular order.

It can be understood as that an embodiment of the present disclosure further provides an electronic device, including: a memory, a processor, and a computer program stored in the memory and executable by the processor, where the computer program, when executed by the processor, causes the processor to implement the above whitelist managing method.

As a non-transitory computer-readable storage medium, the memory can be configured to store a non-transitory software program and a non-transitory computer-executable program. In addition, the memory may include a high-speed random-access memory and a non-transitory memory, for example, at least one magnetic disk storage device, a flash memory device, or another non-transitory solid-state storage device. In some implementations, the memory may optionally include memories remotely located with respect to the processor, and these remote memories may be connected to the processor via a network. Examples of the above-mentioned network include, but are not limited to, the Internet, an intranet, a local area network, a mobile communication network, and a combination thereof.

It should be noted that the network device in this embodiment can be applied as an electronic device of the network architecture of the embodiment shown in FIG. 1, and the electronic device in this embodiment has the same inventive concept as the electronic device of the embodiment shown in FIG. 1 and the whitelist managing method as shown in FIG. 2, so these embodiments have the same implementation principle and technical effect, which will not be described in detail herein.

A non-transitory software program and instructions required to implement the information processing method of the above embodiments are stored in a memory and, when executed by a processor, perform the information processing method of the above embodiments, for example, perform the method steps S100 to S300 of FIG. 2 described above, or the method steps corresponding to steps S100 to S300, steps S400 to S600 and their sub-steps shown in FIGs. 2 and 3. Exemplarily, referring to the embodiment shown in FIG. 2, the processor listens to the main application processing request from the first user to obtain the application information of the cloner application and acquires a first whitelist, and compares the application name of each application in the first whitelist separately with the application name of the main application and in the case where there is an application in the first whitelist that has a matching application name, the application identifier of the cloner application is added to the first whitelist.

It is to be understood that the present disclosure further provides a computer-readable storage medium storing computer-executable instructions, the computer-executable instructions being used to perform the above method for managing a first whitelist, for example, perform the method steps S100 to S300 of FIG. 2 described above, or the method steps corresponding to steps S100 to S300, steps S400 to S600 and their sub-steps shown in FIGs. 2 and 3.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage apparatuses, or any other medium that can be configured to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

The above is a detailed description of some implementations of the present disclosure, but the present disclosure is not limited to the above-mentioned embodiments. Those having ordinary skill in the art can also make various equivalent modifications or replacements without departing from the principle of the present disclosure, and these equivalent modifications or replacements are all included in the scope defined by the claims of the present disclosure.

## Claims

1. A whitelist managing method, comprising:
receiving a cloner application creation request from a first user, wherein the cloner application creation request is used to request the creation of a cloner application corresponding to a main application;
acquiring a first whitelist corresponding to the first user, wherein the first whitelist is a list of applications allowed to enter a standby hibernation mode; and
adding the cloner application to the first whitelist in the case where the main application is in the first whitelist.

2. The method of claim 1, wherein
the standby hibernation mode comprises at least one of a doze mode or an application standby mode; and
correspondingly, the first whitelist comprises at least one of a doze whitelist or an application standby whitelist, wherein the doze whitelist is a list of applications allowed to enter the doze mode, and the application standby whitelist is a list of applications allowed to enter the application standby mode.

3. The method of claim 1, wherein
said adding the cloner application to the first whitelist in the case where the main application is in the first whitelist comprises:
acquiring an application name set corresponding to the first whitelist; and
adding the cloner application to the first whitelist in the case where there exists an application in the application name set that has an application name matching that of the main application.

4. The method of claim 3, wherein
said adding the cloner application to the first whitelist comprises:
adding an application identifier of the cloner application to the first whitelist.

5. The method of claim 1, further comprising:
switching a current user of a terminal device from the first user to a second user in response to a received user switching request;
acquiring a first application set corresponding to the second user, wherein the first application set is a list of applications of the second user that are allowed to enter the standby hibernation mode; and
performing adjustment processing on the first whitelist according to the first application set to obtain a second whitelist of the second user,
wherein the adjustment processing comprises at least one of
removing an application that does not exist in the first application set from the first whitelist; or
adding an application that exists in the first application set and does not exist in the first whitelist to the first whitelist.

6. The method of claim 1, further comprising:
responding to a user creation request from a second user and acquiring a first application set corresponding to the second user; and
adding a first application that exists in the first application set and has an application name matching that of an application in the first whitelist to the first whitelist.

7. The method of claim 6, wherein
said adding a first application that exists in the first application set and has an application name matching that of an application in the first whitelist to the first whitelist comprises:
acquiring an application name set corresponding to the first whitelist;
traversing each application in the application name set and performing application name matching with applications in the first whitelist to obtain several first applications; and
adding application identifiers of cloner applications corresponding to the first applications separately to the first whitelist.

8. An electronic device, the device comprising:
a receiving processing module for receiving a cloner application creation request from a first user, wherein the cloner application creation request is used to request the creation of a cloner application corresponding to a main application;
an acquisition module for acquiring a first whitelist corresponding to the first user, wherein the first whitelist is a list of applications allowed to enter a standby hibernation mode; and
a list processing module for adding the cloner application to the first whitelist in the case where the main application is in the first whitelist.

9. An electronic device, comprising: a memory, a processor, and a computer program stored in the memory and executable by the processor, wherein the computer program, when executed by the processor, causes the processor to implement a whitelist managing method of any one of claims 1 to 7.

10. A computer-readable storage medium storing computer-executable instructions configured to cause a computer to perform a whitelist managing method of at least any one of claims 1 to 7.
